Europäisches Patentamt

European Patent Office

Office européen des brevets

(19)

(11) Publication number: **0 047 101**
**A2**

# (12) EUROPEAN PATENT APPLICATION

(21) Application number: **81303779.3**

(22) Date of filing: **19.08.81**

(51) Int. Cl.³: **G 01 N 31/22**

(30) Priority: **02.09.80 GB 8028307**

(43) Date of publication of application:
**10.03.82 Bulletin 82/10**

(84) Designated Contracting States:
**AT BE CH DE FR GB IT LI LU NL SE**

(71) Applicant: **VEDALE LIMITED**
**21 Mincing Lane**
**London EC3R 7PT(GB)**

(72) Inventor: **Fellows, Adrian Neville**
**1 Slater Bank**
**Hebden Bridge West Yorkshire(GB)**

(74) Representative: **Hartley, David et al,**
**WITHERS & ROGERS 4 Dyer's Buildings Holborn**
**London, EC1N 2JT(GB)**

(54) Improved indicator system for useful life of products which release active agents into the atmosphere.

(57) An indicator comprising a substance which becomes oxidised and so changes colour on exposure to the atmosphere and means for inhibiting the rate at which such oxidation occurs, whereby the said colour change takes place over a predetermined time.

A product containing such an indicator and an active agent for example a volatile air freshener, insecticide or vapour-phase corrosion inhibitor, which is gradually released into the atmosphere, so that the change in colour of the indicator is related to the depletion or exhaustion of the active ingredient.

EP 0 047 101 A2

- 1 -

Improved Indicator System For Useful Life Of Products
Which Release Active Agents Into The Atmosphere

This invention relates to an indicator particularly
although not exclusively for a product containing a
composition such as an air-freshener, insecticide or
a vapour phase corrosion inhibitor, which releases an
active agent into the atmosphere, to indicate the
useful life of such a product. The invention also
relates to a product of the above mentioned kind
including such an indicator.

With certain conventional products of this kind, the
composition eventually decomposes so that it is possible to
see when the product needs to be replaced. Otherwise
detection of the useful life is not possible except,
when the active agent has a distinctive odour, by
smell. However, even testing by smell is imprecise
since the active agent may be masked by other more
powerful odours.

One object of the present invention is to provide a
more reliable and easily discernable indication of the
useful life of these products.

Various colour change indicator systems are known for
example acid-base indicators for indicating pH, but it

- 2 -

has not hitherto been possible to provide a time span **0047101** indicator suitable, for example, for indicating the useful life of products of the kind referred to, by a colour change which can be related to the exhaustion of the products active agent into the atmosphere. However, market research has indicated that there is a substantial demand for such an indicator.

According to one aspect of the invention there is provided an indicator comprising a substance which becomes oxidised and so changes colour on exposure to the atmosphere and means for inhibiting the rate at which such oxidation occurs, whereby the said colour change takes place over a predetermined time.

The choice of a colour change caused by oxidation of the substance concerned, which is preferably a dye, for example, a vat dye, has particular advantage since oxygen is ubiquitous and generally present in the atmosphere in constant proportions.

Although indicators according to the present invention may be used in general to indicate the expiry of any period of time selected or predetermined by suitably controlling the oxidation rate, they may, with particular advantage, be used to indicate the useful life of products of the kind referred to above, containing a composition which releases an active agent into the atmosphere.

According to another aspect of the invention there is therefore provided a product comprising a composition capable of gradually releasing an active agent into the atmosphere on exposure thereto, and an indicator comprising a substance which becomes oxidised and so changes colour on exposure to the atmosphere and means for inhibiting the rate at which such oxidation occurs, whereby the said colour change takes place over a predetermined time.

Preferably, the colour change becomes complete as the active agent becomes exhausted. Any increase or decrease in the depletion rate of the product as a result of temperature variations will be at least partially compensated for by a corresponding increase or decrease in the rate of oxidation of the said substance.

The substance which changes colour may, for example, be dispersed in a liquid, gel, solid or polymer, or is applied to a substrate. The product may also be present in the same liquid, gel, solid or polymer, or be applied to the same or different substance. Various types of inhibiting means may be employed. For example, the inhibiting means may comprise a reducing agent or antioxidant, or alternatively or additionally a barrier layer physically separating the substance which changes colour from the atmosphere, but permeable to oxygen at a predetermined rate.

In this latter case, the barrier layer may be a polymer film or a lacquer film, or the barrier layer may form at least a part of a container for the indicator or product. In these cases the product may also be present in the film or container.

In certain preferred embodiments, the substance which changes colour is a vat dye.

The colour change may occur at any selected stage in depletion of the active agent but preferably occurs when substantially all of the active agent is expended. The substance may either be dissolved or otherwise dispersed in a suitable liquid, gel, solid or polymer (e.g. polyvinyl pyrrolidene) medium or be absorbed into or otherwise applied to a substrate of, for example textile and/or paper material. If the substance is a vat dye, the reduced form of this is rapidly oxidised to the quinonoid form, this being a well recognised phenomenon which is the basis of the vat dyeing process for cotton and other textiles.

The present invention relies upon controlling the rate at which the oxidation reaction proceeds and this may be achieved in a variety of ways, for example, chemically, by the addition of suitable antioxidants to the substance or by disposing the substance in a reducing environment (if necessary in the presence of an alkali, depending on the type of dye used) which in addition to improving the stability of the substance acts to slow down the oxidation rate if it is dispersed·in a gel, or other matrix or is absorbed on a carrier substrate.

We prefer, however, to control the oxidation reaction by means of a barrier layer physically separating the substance from the atmosphere but permeable to oxygen at a predetermined rate selected so as to regulate the access of oxygen from the air and hence control the colour change of the substance over a predetermined period of time. This period of time may usefully be extended to be a number of days, weeks or even months. Suitable barrier materials comprise, for example, polyethylene, polypropylene, polyester, polyamide, cellulose, polyvinyl chloride, polyvinylidene chloride, or similar polymer films and including copolymers of the above or lacquered films.

The gauge or thickness of the chosen barrier layer may be selected to suit the desired product life, e.g. a thin polyethylene film might be chosen where a short product life of hours or a few days is required, whereas a more substantial film of, for example, polyethylene/polyester colaminate might be chosen for a product intended to have a life expectancy of a number of weeks.

An oxygen permeability of as low as 0.001 $cm^3/cm^2$ min (at a pressure of 1 $Kg/cm^2$) may be achieved using polyethylene/ polyester composite films whereas a film of microporous polypropylene can be produced having an oxygen permeability in the range 3 to 5 $cm^3/cm^2/min$.

In the case of co-extruded biaxially-oriented polypropylene film which we have found particularly suitable, the variation in oxygen permeability bears a substantially linear relationship to the thickness of the film. This enables accurate control of the oxidation rate and hence timing of the colour change. Although with products of the kind referred to, matching of the oxidation rate to the rate of depletion of the active agent is basically an empirical process, accurate matching is nevertheless possible. When the substance is dispersed in a solution, gel or polymer matrix the barrier layer may be in the form of, or form part of, a container therefor having the required oxygen permeability and being transparent or translucent whereby the colour change is visible. Where the product is an air freshener this may take the form of a thermoplastic shape e.g. disc containing volatile perfume components in which disc is a window comprising two strips of thermoplastic transparent film containing the substance in an aqueous gel. The oxygen permeability of the transparent film is chosen to permit the colour change to take place over a period related to the loss of perfume from the bulk of the disc.

It will be understood, that the product may contain compositions other than air fresheners; for example; insecticides, a vapour phase corrosion inhibitor, a microbiocide or a timber preservative.

The active agent also may be dissolved or dispersed in the solution, gel or polymer matrix.

Alternatively the active agent is absorbed into or otherwise applied to a substrate comprising an absorbent material such as a woven or non-woven paper and/or textile fabric. In one embodiment the colour change indicator system is attached to the substrate and preferably comprises the above described oxygen permeable envelope containing the gel in which the reduced substance is dispersed.

In a preferred embodiment both the active agent and the reduced dye or dye together with a reducing agent are applied to a substrate preferably·by absorbtion or impregnation and in either the same or different areas of the substrate. Control of the dye oxidation reaction is best achieved by coating (or colaminating) the substrate after the dye and the active agent have been applied, with a film of oxygen permeable polymeric material which is also permeable to the active agent allowing release thereof into the atmosphere. To avoid oxidation of the reduced dye prior to application of permeable film the impregnated substrate may be stored and subsequently processed in an inert atmosphere. Alternatively, after impregnation of the substrate, the dye and the permeable film may be applied simultaneously by dipping the substrate in a bath of a solution of the reduced vat dye or vat dye and reducing agent in the polymeric material so that the reduced form of vat dye is absorbed into the substrate and immediately covered with a film of polymeric material which is subsequently dried and/or cured.

In a further embodiment, the reduced dye may be applied to the substrate in the form of micro-capsules containing the reduced dye, the walls of the micro-capsules forming the required oxygen permeable barrier. In such an embodiment, the active principle may be contained on the substrate or within the microcapsules. The microcapsule walls may be of a wide variety of materials, for example gelatin, alginate, polyvinyl alchohol and other water soluble materials or water insoluble thermoplastics polymers in the case of microcapsules produced by co-acervation.

As stated above the dye is preferably a vat dye. Examples of suitable dyes are: INDIGO, ALIZARINS, SOLANTHRENE BORDEAUX F2R, CALEDON BLUE XRC, CIBA BLUE 2RH, CIBANONE RED 6B, CIBANONE YELLOW GC.

The reducing system utilised may comprise an alkali and a reducing agent, the choice of which is largely influenced by the dye being used. The concentration of dye, alkali, and reducing agent and the respective ratios of these agents may usefully be varied over a wide range to influence the rate of colour change. The alkali may be chosen from among ammonium or alkali metal hydroxides, carbonates, phosphates or other suitable alkali metal salts, or organic alkalis such as amines, alkanolamines etc. or may in certain cases advantageously be an alkaline structuring agent such as a synthetic hectorite. The reducing agent is preferably sodium dithionite, but other agents such as sodium borohydride may also be utilised.

One example of an indicator composition according to the present invention contains

    1 - 5 parts by weight of reducing agent (e.g. sodium dithionite)

    0.05 - 5 parts by weight of dye (e.g. Cibanone Yellow GC)

0.1 - 5 parts by weight of alkali (e.g. NaOH)

If the remainder is water this will produce a liquid composition containing the reduced form of dye which can be enclosed within an envelope of oxygen permeable material or may be used to dye a substrate such as a fabric, which is subsequently coated with a suitable film selected to produce the desired oxidation rate.

With the addition of 0.05 - 5p.b.w. of a structuring agent such as Agar to the above composition a gel is produced and this may, but need not necessarily be, enclosed within an oxygen permeable film selected as described above.

One particular indicator contains 1 p.b.w. Sodium dithionite (reducing agent)
0.05 -1 p.b.w. dye
    0.3 p.b.w. Na OH
    2.5 p.b.w. Agar
    remainder water

This indicator can be prepared by dispersing the Agar in water and heating to dissolve the agar before adding the reducing agent together with the dye. On adding the alkali and mixing until it dissolves there is a colour change as the dye is converted to the reduced form. The resulting gel is then enclosed within a polypropylene or polyethylene capsule having an oxygen permeability of 1 $cm^3/cm^2$/min to produce an indicator which will exhibit a colour change after a predetermined time in the range 3 to 7 days.

Claims:

1. An indicator comprising a substance which becomes oxidised and so changes colour on exposure to the atmosphere and means for inhibiting the rate at which such oxidation occurs, whereby the said colour change takes place over a predetermined time.

2. A product comprising a composition capable of gradually releasing an active agent into the atmosphere on exposure thereto, and an indicator comprising a substance which becomes oxidised and so changes colour on exposure to the atmosphere and means for inhibiting the rate at which such oxidation occurs, whereby the said colour change takes place over a predetermined time.

3. An indicator or product according to claim 1 or claim 2 respectively, wherein the colour change becomes complete as the active agent becomes exhausted.

4. An indicator or product according to claim 1 or claim 2 respectively, or claim 3, wherein the substance is dispersed in a liquid, gel, or polymer, or is applied to a substrate.

5. An indicator or product according to claim 1 or claim 2 respectively, or according to claim 3 or claim 4 wherein the inhibiting means comprises a reducing agent or antioxidant.

6. An indicator or product according to claim 1 or claim 2 respectively, or according to claim 3 or claim 4, wherein the inhibiting means comprises a barrier layer physically separating the substance from the atmosphere, but permeable to oxygen at a predetermined rate.

- 2 - 0047101

7. An indicator or product according to claim 6, wherein the barrier layer is a polymer film or a lacquer film.

8. An indicator or product according to claim 6, wherein the barrier layer forms at least a part of a container for the indicator or product.

9. An indicator or product according to claim 1 or claim 2 respectively, or to claims 3 to 8, wherein the substance is a vat dye.

10. A product according to claim 2 wherein the active agent is present in the same or in a different liquid, gel, or polymer or is applied to the same or to a different substance.

11. A product according to claim 7 or claim 8, wherein the active agent is in the film or in the container.